# EUROPEAN PATENT APPLICATION

(11) **EP 1 748 629 A2**
(43) Date of publication of application: **31.01.2007**
(21) Application number: 06014843.4
(22) Date of filing: 17.07.2006
(51) Int. Cl.: H04M 1/04

(54) **Foldable cradle for portable terminals**

(30) Priority: 25.07.2005 KR 2005067413
(71) Applicant: Samsung Electronics Co., Ltd., Suwon-si, Gyeonggi-Do (KR)
(72) Inventor: Jeun, Young-Mok, c/o Samsung Electronics Co., Ltd., Suwon-si, Gyeonggi-do (KR); Kwak, Jin-Young, c/o Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

A portable, foldable cradle for portable terminals (4) is provided. The foldable cradle includes a cradle body (1), a cradle support (2) folded or unfolded with respect to the cradle body (1), a hinge unit (3) provided to the cradle body (1) and rotatably coupling the cradle support (2), and a means that is provided to the cradle body (1), brought into direct contact with a predetermined part of the portable terminal (4) to prevent the contacted portable terminal (4) from sliding in a ground direction, and adjusts a cradled state of the portable terminal (4).

## Description

### BACKGROUND OF THE INVENTION

### 1. Field of the Invention

The present invention relates to portable terminals including DMB (Digital Media Broadcasting) phones, game phones, camera phones, cellular phones, PDAs (Personal Digital Assistants), HHPs (Hand Held Phones) etc., and more particularly to a foldable cradle that is easily carried.

### 2. Description of the Related Art

In general, a "portable terminal" refers to an electronic device which any user can carry with him/her to perform wireless communication with another party. In consideration of portability, the portable terminals show a tendency not only to become more compact, slim, handy and light-weight, but also provide multimedia services that can be open to a wider variety of functions. In particular, the future portable terminals will be gradually used for multi-function and multi-purpose while being and becoming even more compact and light-weight. They will also be modified to be suitable for various multimedia or Internet environments. Additionally, such portable terminals are now commonly used by all kinds of people without distinction to age or sex anywhere throughout the world, and are recognized as an indispensable commodity.

Conventional portable terminals may be classified into various types according to their appearance, such as bar-type, flip-type, and folder-type. The bar-type portable terminal has a single housing shaped like a bar. The flip-type portable terminal has a flip which is pivotably mounted by a hinge unit to a bar-shaped housing. The folder-type portable terminal has a folder coupled by a hinge unit to a single bar-shaped housing in such a manner that the folder is rotatably folded against or unfolded from the housing.

Further, the portable terminals may be classified into neck wearable and wrist wearable types according to the position at which or the way in which the portable terminal is carried. The neck wearable type portable terminal is one which a user wears around the neck using a string, while the wrist wearable type portable terminal is one which a user wears around the wrist.

Furthermore, the portable terminals may be classified into rotation-type and sliding-type according to its opening and closing. In the rotation-type portable terminal, two housings are coupled to each other in such a manner that one housing rotates to be opened or closed relative to the other, while facing each other. In the sliding-type portable terminal, two housings are coupled to each other in such a manner that one housing slides to be opened or closed relative to the other. These variously classified portable terminals can be easily understood by those skilled in the art.

Additionally, the conventional portable terminals are now incorporating a function of transmitting data at a high speed in addition to the basic function of performing voice communication. In other words, according to the increased demand by consumers, the portable terminals now are capable of providing services using wireless communication technology, which transmit data at a high speed.

Recently portable terminals now include a camera lens, which is enabled to transmit an image signal. Current conventional portable terminals have an imbedded or external camera lens module, which enables a user to perform video communication with the other party or to take a photograph of a desired subject.

In addition, the current portable terminal enables a user to view various broadcastings for moving pictures in a DMB mode as well as enjoy various games or entertainments under a multimedia environment.

However, the conventional portable terminals are not provided with a separate cradle for the DMB mode, and thus make it inconvenient to view the various moving picture broadcastings.

### SUMMARY OF THE INVENTION

Accordingly, the present invention has been made to solve the above-mentioned problems occurring in the prior art, and an objective of the present invention is to provide a foldable cradle that is easily carried like accessories, thereby being conveniently used anywhere anytime together with a portable terminal. This object is solved by the subject matter of the independent claims. Preferred embodiments are defined in the dependent claims.

It is another aspect of the present invention to provide a foldable cradle capable of adjusting the cradle angle of a slantingly cradled portable terminal, thereby being convenient in view a display device mounted to the portable terminal.

It is yet another aspect of the present invention to provide a foldable cradle capable of cradling all portable terminals.

It is still yet another aspect of the present invention to provide a foldable cradle capable of selectively cradling all portable terminals in a traverse or longitudinal direction, thereby being convenient in use.

It is still yet another aspect of the present invention to provide a foldable cradle having a plurality of corrugations that can adjust a cradled posture of the portable terminal, contribute to minimization of a thickness, and adjust a slantingly cradled angle of the portable terminal.

It is still yet another aspect of the present invention to provide a foldable cradle designed to have a simple, foldable structure, thereby being easy in production from the manufacturer's point of view, and being economic from the user's point of view.

In order to accomplish these aspects, according to an embodiment of the present invention, a foldable cradle includes a cradle body, a cradle support folded or unfolded with respect to the cradle body, a hinge unit provided to the cradle body and rotatably coupling the cradle support, and means that is provided to the cradle body, brought into direct contact with a predetermined part of the portable terminal to prevent the contacted portable terminal from being slid in a ground direction, and adjusts a cradled state of the portable terminal.

In accordance with another embodiment of the present invention, a foldable cradle for portable terminals includes a first cradle body, a cradle support folded or unfolded with respect to the first cradle body, a second cradle body folded or unfolded with respect to the cradle support, a first hinge unit provided to the first cradle body and rotatably coupling the cradle support, a second hinge unit provided to the cradle support and rotatably coupling the second cradle body, means that are provided to the first and second cradle bodies respectively, brought into direct contact with a predetermined part of the portable terminal to prevent the contacted portable terminal from being slid in a ground direction, and adjusts a cradled state of the portable terminal. Here, the first and second cradle bodies are selectively used.

### BRIEF DESCRIPTION OF THE DRAWINGS

The above and other aspects, features and advantages of the present invention will be more apparent from the following detailed description taken in conjunction with the accompanying drawings, in which:
FIG. 1 is a perspective view showing a foldable cradle in a folded state in accordance with a first embodiment of the present invention;
FIG. 2 is a perspective view showing a foldable cradle in an unfolded state in accordance with a first embodiment of the present invention;
FIG. 3 is a perspective view showing a state where a portable terminal is cradled on a foldable cradle according to a first embodiment of the present invention;
FIG 4 is a side view of FIG. 3;
FIG. 5 is a perspective view showing a state where rubber is attached to a foldable cradle according to a first embodiment of the present invention;
FIG. 6 is a perspective view showing a foldable cradle in a folded state in accordance with a second embodiment of the present invention;
FIG. 7 is a perspective view showing a foldable cradle in an unfolded state in accordance with a second embodiment of the present invention;
FIG. 8 is a side view of FIG. 6;
FIG. 9 is a perspective view showing a state where a portable terminal is cradled on a foldable cradle according to a second embodiment of the present invention; and
FIG. 10 is a side view of FIG. 9.

### DETAILED DESCRIPTION OF THE PREFERRED EMBODIMENT

Hereinafter, the present invention will be described with reference to the accompanying drawings. In the following description, the same elements will be designated by the same reference numerals although they are shown in different drawings. It is apparent to those skilled in the art that the present invention can be implemented without such definitions. Further, in the following description of the present invention, a detailed description of known functions and configurations incorporated herein will be omitted when it may make the subject matter of the present invention unclear.

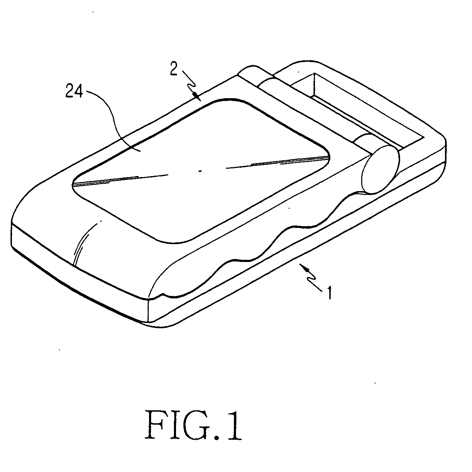

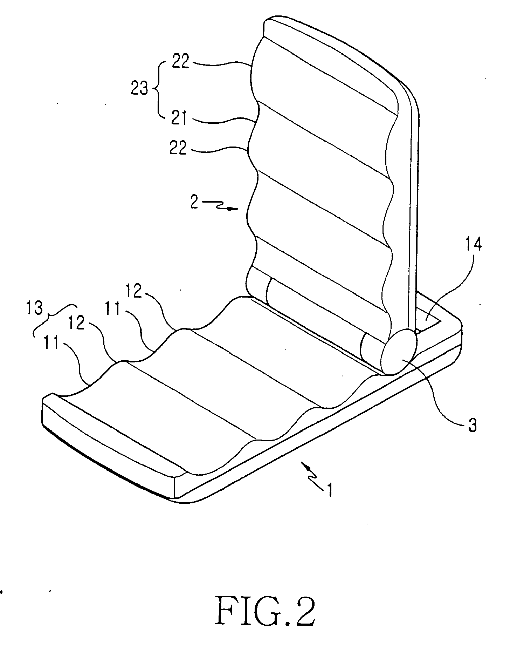

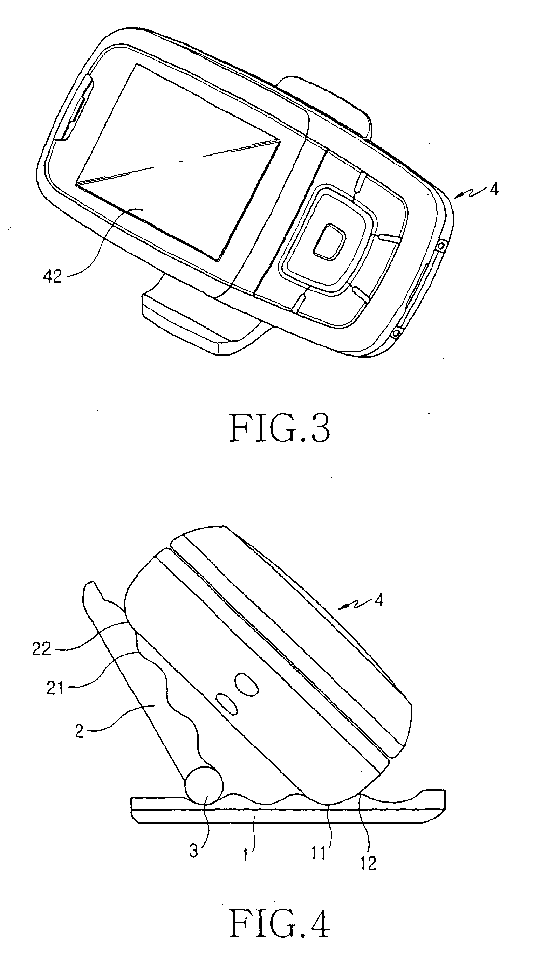

As shown in FIGS. 1 and 2, a cradle according to a first embodiment of the present invention is a folding type. Specifically, the cradle is composed of a cradle body 1, a cradle support 2, a hinge unit 3, and means for adjusting a cradled posture with a portable terminal cradled on the cradle body 1 and the cradle support 2. The cradle support 2 is rotatably coupled to the cradle body 1 by the hinge unit 3, so that it can be folded against or unfolded from the cradle body 1. A folded state is shown in FIG. 1, and an unfolded state is shown in FIG. 2. The adjusting means is provided on the cradle body 1, brought into direct contact with a predetermined part of the portable terminal, enables the cradled portable terminal to be kept from sliding in the direction of the ground and to be maintained in a slanted state, and thereby adjusts a cradled state, and particularly a slantingly cradled state, of the portable terminal. The slantingly cradled state of the portable terminal is shown in FIGS. 3 and 4.

The adjusting means includes at least one first corrugation 13 that is formed on a top surface of the cradle body 1. The first corrugation 13 has grooves 11 and ridges 12 formed alternately, and is preferably provided parallel to a direction in which the hinge unit 3 extends. Thus, the first corrugation 13 has preferably its cross section in a wave form, and has a smoothly curved form.

The cradle support 2 is additionally provided with at least one second corrugation 23 on its bottom surface. The second corrugation 23 has grooves 21 and ridges 22 that are formed alternately and provided parallel to the hinge unit 3. Further, the second corrugation 23 also has its cross section preferably in a wave form, and has a smoothly curved form.

As shown in FIGS. 1 and 2, when the cradle support 2 is completely folded against the cradle body 1, the grooves 11 of the first corrugation 13 are engaged with the ridges 22 of the second corrugation 23, and the ridges 12 of the first corrugation 13 are engaged with the grooves 21 of the second corrugation 23. In other words, when the first and second corrugations 13 and 23 are completely folded in a form corresponding to each other, a folded thickness of the cradle is minimized. Consequently, the first and second corrugations 13 and 23 provide a triple function, namely of adjusting the cradle posture the portable terminal, contributing to minimization of the thickness, and adjusting the slantingly cradled angle of the portable terminal.

The cradle body is additionally provided with an opening 14 in a region that extends in a lengthwise direction thereof. The opening 14 is integrally formed around the hinge unit 3, and enables the cradle to be carried using a string (not shown) together with the portable terminal.

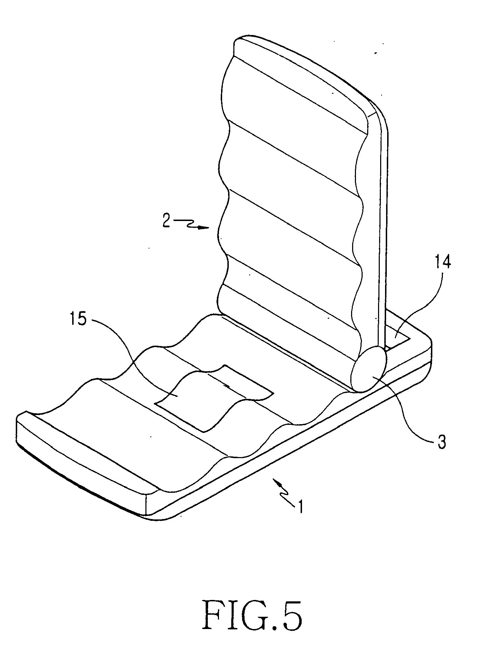

As shown in FIG. 5, the cradle body 1 is additionally provided with an elastic body 15, such as rubber or silicon, on the top surface thereof in the region of the first corrugation 13. The elastic body 15 serves to efficiently prevent the portable terminal from sliding by means of friction against the cradled portable terminal. Of course, the elastic body 15 has the same form as the first corrugation 13, namely it includes grooves and ridges formed alternately.

As shown in FIG. 1, the cradle support 2 may be mounted on the top surface thereof with a mirror 24 or a cleaner 24 for a Liquid Crystal display device so as to perform an additional function.

As shown in FIGS. 1 and 2, the cradle support 2 is supplied with an opening or closing force or an opening or closing brake force by a hinge module (not shown) at the cradle body 1. Specifically, the hinge module mounted in the hinge unit 3 causes the cradle support 2 to be supplied with the closing force in the state as shown in FIG. 1, and with the brake force in the state as shown in FIG. 2. The hinge module is composed of a hinge shaft, a hinge cam, and a hinge spring. Of course, the opening/closing operation of the cradle support 2 may be carried out by the hinge module manually, semi-automatically or automatically. The hinge module supplies the cradle support 2 with the closing force between a zero degree of angle and a predetermined degree of first angle, with the opening force at an angle greater than equal tithe first angle, and with the brake force at a predetermined degree of second angle. Further, the slantingly cradled angle of the portable terminal can be adjusted according to the amount of rotation of the cradle support 2.

The portable terminal 4 has been described to be slantingly cradled on the cradle. As shown in FIG. 4, a predetermined part of the portable terminal 4 is brought into direct contact with any groove 11 of the first corrugation 13, and thus sliding of the portable terminal is prevented. Further, the predetermined part of the portable terminal 4 is brought into contact with a groove selected from the numerous grooves, so that the slantingly cradled state can be adjusted. Of course, the first corrugation 13 of the cradle body primarily maintains the cradled state of the portable terminal, and the second corrugation 23 of the cradle support secondarily maintains the cradled state of the portable terminal. When the predetermined part of the portable terminal 4 is brought into contact with a groove remote from the hinge unit 3 among from the grooves 11 of the first corrugation 13, the cradled state is kept in a smooth slanted state. When the predetermined part of the portable terminal 4 is brought into contact with a groove near the hinge unit 3 among from the grooves 11 of the first corrugation 13, the cradled state is kept in a sharp slanted state.

In FIG 3, the cradled state where the portable terminal 4 is placed on the cradle in a transverse direction is shown. This is for providing a display device 42 of the portable terminal 4 in a state where a transverse view is allowed. It is natural that it is possible to cradle the portable terminal 4 in a longitudinal direction.

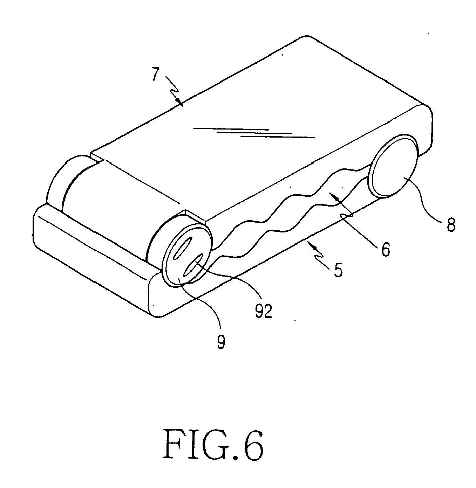

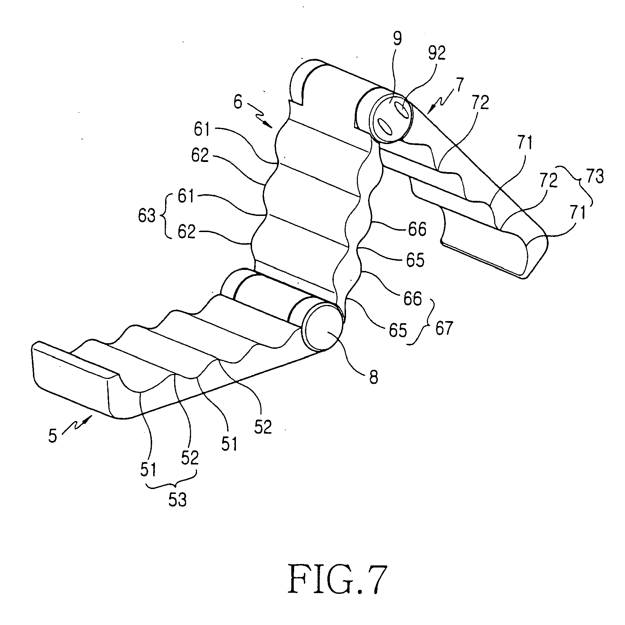

As shown in FIGS. 6 to 8, a cradle according to a second embodiment of the present invention is a double folding type. The cradle is composed of first and second cradle bodies 5 and 7, a cradle support 6, first and second hinge units 8 and 9, and means for adjusting a cradled posture with a portable terminal cradled on one selected from the first and second cradle bodies 5 and 7, and the cradle support 6. The cradle support 6 is rotatably coupled to the first and second cradle bodies 5 and 7 by the first and second hinge units 8 and 9 respectively, so that it can be folded against or unfolded from the first cradle body 5 and the second cradle body 7 can be folded against or unfolded from the cradle support 6. A folded state is shown in FIG. 6, whereas an unfolded state is shown in FIG. 7.

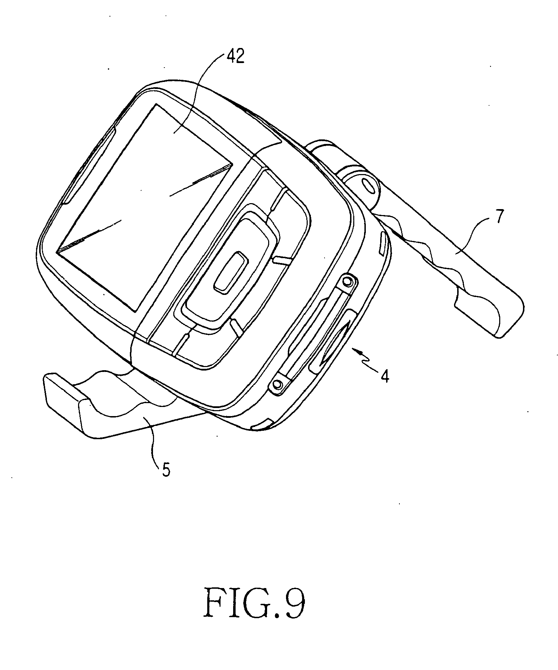

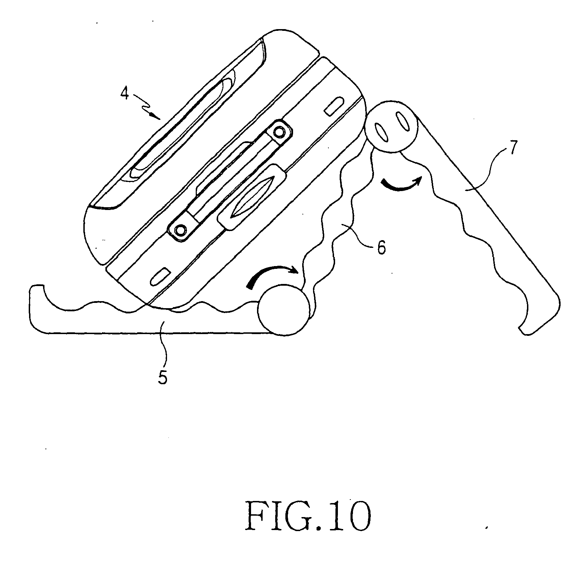

The adjusting means are provided to the first and second cradle bodies 5 and 7 respectively, brought into direct contact with a predetermined part of the portable terminal, enable the cradled portable terminal to be kept from sliding in the direction of the ground and to be maintained in a slant state, and thereby adjust a cradled state, and particularly a slantingly cradled state, of the portable terminal. Furthermore, the first and second cradle bodies 5 and 7 may be selectively used. In order to cradle the portable terminal according to user's convenience, the first cradle body 5 and the cradle support 6 may be used, and the second cradle body 7 and the cradle support 6 may be used. Of course, when the first cradle body 5 is used, the second cradle body 7 supports the cradle support 6 at the back. Accordingly, the slantingly cradled portable terminal is supplied with stability. The slantingly cradled state of the portable terminal is shown in FIGS. 9 and 10.

The adjusting means includes at least one first corrugation 53 that is formed on a top surface of the first cradle body 5. The first corrugation 53 preferably has grooves 51 and ridges 52 formed alternately, and is provided parallel to a direction in which the first hinge unit 8 extends. Thus, the first corrugation 53 has its cross section in a wave form, and has a smoothly curved form.

Further, the adjusting means includes at least one second corrugation 73 that is formed on a bottom surface of the second cradle body 7. The second corrugation 73 has grooves 71 and ridges 72 formed alternately, and is provided parallel to a direction in which the second hinge unit 9 extends. The second corrugation 73 preferably has its cross section in a wave form, and has a smoothly curved form. Therefore, the first and second corrugations 53 and 73 are parallel to each other, and the extension directions of the first and second hinge units 8 and 9 are parallel to each other.

The cradle support 6 is additionally provided with at least one third corrugation 63 on a bottom surface thereof, and at least one fourth corrugation 67 on a top surface thereof. The third corrugation 63 has grooves 61 and ridges 62 that are formed alternately and extend parallel to the first hinge unit 8, and the fourth corrugation 67 has grooves 65 and ridges 66 that are formed alternately and extend parallel to the first hinge unit 8. Further, each of the third and fourth corrugations 63 and 67 also has its cross section preferably in a wave form, and has a smoothly curved form. Therefore, the third and fourth corrugations 63 and 67 are parallel to each other, and to the first and second hinge units 8 and 9. The first hinge unit 8 is located on one end of the cradle support 6, and the second hinge unit 9 is located on the other end of the cradle support 6. The first hinge unit 8 makes the first cradle body 5 coupled rotatably to the cradle support 6, whereas the second hinge unit 9 makes the second cradle body 7 coupled rotatably to the cradle support 6.

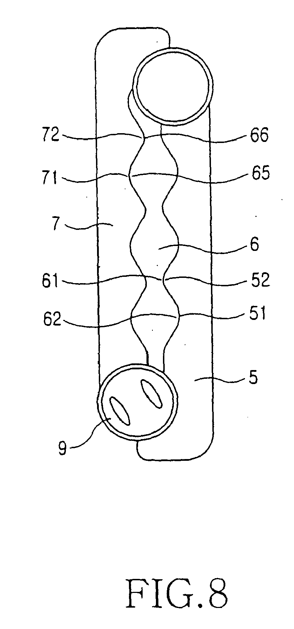

As shown in FIG. 8, when the cradle support 6 is folded against the first cradle body 5, and the second cradle body 7 is folded against the cradle support 6, and thus the first and second cradle bodies 5 and 7 and the cradle support 6 are disposed so as to be stacked with respect to each other, the grooves 51 of the first corrugation 53 are engaged with the ridges 62 of the third corrugation 63, and the ridges 52 of the first corrugation 53 are engaged with the grooves 61 of the third corrugation 63, and the grooves 71 of the second corrugation 73 are engaged with the ridges 66 of the fourth corrugation 67, and the ridges 72 of the second corrugation 73 are engaged with the grooves 65 of the fourth corrugation 67. Thus, the thickness of the folded cradle is minimized. Consequently, the first, second, third, and fourth corrugations 53, 73, 63 and 67 provide a triple function, namely of adjusting the cradle posture the portable terminal, contributing to minimization of the thickness, and adjusting the slantingly cradled angle of the portable terminal.

One of the first and second hinge units 8 and 9 is additionally provided with an opening 92. The opening 92 enables the cradle to be carried using a string together with the portable terminal. The opening 92 is formed on the outermost portion of the selected hinge unit. In the drawings, the opening 92 is illustrated to be formed at the second hinge unit 9.

As shown in FIGS. 6 to 8, the cradle support 6 at the first cradle body 5, and the second cradle body 7 at the cradle support 6 are supplied with an opening or closing force or an opening or closing brake force by two hinge modules (not shown) that are housed in the first and second hinge units 8 and 9 respectively. Specifically, the hinge module housed in the first hinge unit 8 causes the cradle support 6 and the second cradle body 7 to be supplied with the closing force in the state as shown in FIG. 6, and with the brake force in the state as shown in FIG. 7. Each of the two hinge modules is composed of a hinge shaft, a hinge cam, and a hinge spring. Of course, the opening/closing operation of the cradle support 6 or the second cradle body 7 may be carried out by the hinge module manually, semi-automatically or automatically. The hinge module supplies the cradle support 6 and the second cradle body 7 with the closing force between a zero degree of angle and a predetermined degree of first angle, with the opening force at an angle equal to or greater than the first angle, and with the brake force at a predetermined degree of second angle.

Meanwhile, it has been described that the portable terminal 4 can be slantingly cradled on the cradle. As shown in FIGS. 9 and 10, a predetermined part of the portable terminal 4 is brought into direct contact with any groove 51 of the first corrugation 53, and thus the sliding of the portable terminal is prevented. Further, the predetermined part of the portable terminal 4 is brought into contact with the groove selected from the numerous grooves, so that the slantingly cradled state can be adjusted. Of course, the first corrugation 53 of the first cradle body primarily maintains the cradled state of the portable terminal, and the second corrugation 63 of the cradle support secondarily maintains the cradled state of the portable terminal. When the predetermined part of the portable terminal 4 is brought into contact with a groove remote from the first hinge unit 8 among from the grooves 51 of the first corrugation 53, the cradled state is kept in a smooth slant state. When the predetermined part of the portable terminal 4 is brought into contact with a groove near the first hinge unit 8 among from the grooves 51 of the first corrugation 53, the cradled state is kept in a sharp slant state. Moreover, the slantingly cradled state of the portable terminal can be naturally adjusted according to an opened or closed angle of the cradle support 6. Further, in the state as shown in FIG. 10, the second cradle body 7 supports the cradle support 6 at the back, thereby providing the cradled portable terminal with stability.

In FIG. 9, the cradled state where the portable terminal 4 is placed on the cradle in a transverse direction is shown. This is for providing a display device 42 the portable terminal 4 in a state where a transverse view is allowed. Naturally, it is possible to cradle the portable terminal 4 in a longitudinal direction.

As set forth above, the cradle of the present invention is convenient to use because the first and second cradle bodies 5 and 7 can be selectively used, and performs a double function where one of the first and second cradle bodies 5 and 7 is used to cradle the portable terminal and the other serves to support the cradle support 6 at the back. Of course, even when the first cradle body 5 is used with the second cradle body 7 folded against the cradle support 6, the cradled state of the portable terminal can be still maintained. In other words, the cradle of the present invention can perform the cradling function using the first cradle body 5 and the cradle support 6, and using the second cradle body 7 and the cradle support 6.

Further, the adjusting means can doubly adjust the slantingly cradled angle of the portable terminal using the second cradle body 7. That is, the cradled angle of the portable terminal can be adjusted according to the amount of rotation of the second cradle body 7. Thus, the cradled angle of the portable terminal 4 can be adjusted by the adjusting means, and according to an amount rotation of the second cradle body 7 as well as an amount of rotation of the cradle support 6.

Meanwhile, in the state of the portable terminal 4 as in FIGS. 3 or 9, the portable terminal is convenient to use in the DMB mode. This is because the display device 42 is set for the transverse view.

As can be seen from the foregoing, the present invention is easily carried like accessories, so that it can be conveniently used anywhere anytime together with the portable terminal. Further, the present invention has the plurality of corrugations, so that it can support the cradled posture of the portable terminal, minimize the thickness to make downsizing advantageous, adjust the slantingly cradled angle of the portable terminal, and selectively cradle the portable terminal in a traverse or longitudinal direction. In addition, the present invention is designed to have a simple, foldable structure, so that it is easy in production from the manufacturer's point of view, and it is economic and easy in manipulation from the user's point of view, and it can cradle all kinds of terminals.

## Claims

1. A foldable cradle for portable terminals (4), comprising:
a cradle body (1);
a cradle support (2) folded or unfolded with respect to the cradle body (1);
a hinge unit (3) provided on the cradle body (1) and rotatably coupling the cradle support (2); and
adjusting means provided on the cradle body (1), for direct contact with a predetermined part of the portable terminal (4) to prevent the contacted portable terminal (4) from sliding, and for adjusting a cradled state of the portable terminal (4).

2. The foldable cradle according to claim 1, wherein the adjusting means includes at least one first corrugation (13) provided on a top surface of the cradle body (1), the first corrugation (13) being parallel to a direction in which the hinge unit (3) extends.

3. The foldable cradle according to claim 2, wherein the first corrugation (13) has a wave form.

4. The foldable cradle according to claim 2, wherein the cradle support (2) is additionally provided with at least one second corrugation (23), the second corrugation (23) extending parallel to a rotation axis of the cradle support (2).

5. The foldable cradle according to claim 4, wherein the second corrugation (23) has a wave form.

6. The foldable cradle according to claim 4, wherein the first and second corrugations (13,23) have grooves (11,21) and ridges (12,22), and when the cradle support (2) is folded against the cradle body (1), the grooves (11) of the first corrugation (13) are engaged with the ridges (22) of the second corrugation (23), and the ridges (12) of the first corrugation (13) are engaged with the grooves (21) of the second corrugation (23).

7. The foldable cradle according to claim 1, wherein the cradle body (1) is additionally provided with an opening (14) in a region that extends in a lengthwise direction thereof, the opening (14) being integrally formed adjacent to the hinge unit (3).

8. The foldable cradle according to claim 1, wherein the cradle support (2) is additionally provided with at least one of a mirror (24) and a cleaner (24) for a liquid crystal display device on a top surface thereof.

9. The foldable cradle according to claim 1, wherein the cradle body (1) is additionally provided with an elastic body (15) on a top surface thereof.

10. The foldable cradle according to claim 1, wherein the adjusting means adjusts a slant state of the cradled portable terminal (4).

11. A foldable cradle for portable terminals (4), comprising:
a first cradle body (5);
a cradle support (6) folded or unfolded with respect to the first cradle body (5);
a second cradle body (7) folded or unfolded with respect to the cradle support (6);
a first hinge unit (8) provided on the first cradle body (5) and rotatably coupling the cradle support (6);
a second hinge unit (9) provided on the cradle support (6) and rotatably coupling the second cradle body (7); and
adjusting means provided on the first and second cradle bodies (5,7) respectively, for direct contact with a predetermined part of the portable terminal (4) to prevent the contacted portable terminal (4) from sliding, and for adjusting a cradled state of the portable terminal (4),
wherein the first and second cradle bodies (5,7) are selectively used.

12. The foldable cradle according to claim 11, wherein the adjusting means includes at least one first corrugation (53) provided on a top surface of the first cradle body (5), and at least one second corrugation (73) provided on a bottom surface of the second cradle body (7), the first and second corrugations (53,73) being parallel to each other, and in being disposed directions in which the first and second hinge units (8,9) extend.

13. The foldable cradle according to claim 12, wherein the first and second corrugations (53,73) have a wave form.

14. The foldable cradle according to claim 13, wherein the cradle support (6) includes at least one third corrugation (63) provided on a bottom surface thereof, and at least one fourth corrugation (67) provided on a top surface thereof, the third and fourth corrugations (63,67) being parallel to each other, and being disposed in directions in which the first and second hinge units (8,9) extend.

15. The foldable cradle according to claim 14, wherein the third and fourth corrugations (63,67) have a wave form.

16. The foldable cradle according to claim 14, wherein the first, second, third, and fourth corrugations (53,73,63,67) have grooves (51,61,65,71) and ridges (52,62,66,72), and when the cradle support (6) is folded against the first cradle body (5), and the second cradle body (7) is folded against the cradle support (6), and the first and second cradle bodies (5,7) and the cradle support (6) are disposed so as to be stacked with respect to each other, the grooves (51) of the first corrugation (53) are engaged with the ridges (62) of the third corrugation (63), and the ridges (52) of the first corrugation (53) are engaged with the grooves (61) of the third corrugation (63), and the grooves (71) of the second corrugation (73) are engaged with the ridges (66) of the fourth corrugation (67), and the ridges (72) of the second corrugation (73) are engaged with the grooves (65) of the fourth corrugation (67).

17. The foldable cradle according to claim 11, wherein one of the first and second hinge units (8,9) is additionally provided with an opening (92), the opening (92) being formed on an outermost portion of the hinge unit (8,9).

18. The foldable cradle according to claim 11, wherein the second cradle body (7) is unfolded from the cradle support (6) and slantingly supports the cradle support (6).

19. The foldable cradle according to claim 11, wherein the adjusting means doubly adjusts the slant state of the cradled portable terminal (4) using the second cradle body (7).
